# EUROPÄISCHE PATENTANMELDUNG

(11) **EP 2 490 181 A1**
(43) Veröffentlichungstag der Anmeldung: **22.08.2012**
(21) Anmeldenummer: 11001207.7
(22) Anmeldetag: 15.02.2011
(51) Int. Cl.: G06T 17/00, G06T 17/20

(54) **Verfahren und Vorrichtung zur Rekonstruktion von 3D-Objekten aus Punktwolken**

(71) Anmelder: Nevigo GmbH, 44866 Bochum (DE)
(72) Erfinder: Rosenkranz, Kai, 44866 Bochum (DE); Sabath, Peter, 45329 Essen (DE); Schröder, Carsten, 44867 Bochum (DE); Nyul, Stefan, 44866 Bochum (DE)
(74) Vertreter: Lehmann, Judith Christina

(57) **Zusammenfassung**

Die vorliegende Erfindung betrifft ein computergestütztes Verfahren zum Erstellen eines digitalen, dreidimensionalen Abbildes eines realen Objekts, wobei das reale Objekt mittels eines Scanners gescannt, als dabei resultierende Scandaten eine Punktwolke bestehend aus einer Mehrzahl von Einzelpunkten erhalten und gespeichert wird, wobei jeder Einzelpunkt durch dreidimensionale Raumkoordinaten darstellbar ist, und die Punktwolke in eine Dreiecksliste zu einem Gesamt-Mesh konvertiert wird, wobei das Konvertieren der Punktwolke in die Dreiecksliste in einem Prozessablaufplan modelliert und parametrisiert wird, wobei in dem Prozessablaufplan jeder Einzelschritt des Konvertierens durch einen individuell parametrisierbaren und ausführbaren Knoten und der Prozessablauf durch Verbindungen dieser Knoten untereinander dargestellt wird, so dass bei Ausführung der Knoten das Gesamt-Mesh erhalten wird.

Ferner werden eine geeignete Vorrichtung und ein entsprechendes Computerprogramm zur Verfügung gestellt.

## Beschreibung

### Technisches Gebiet

Die vorliegende Erfindung betrifft ein Verfahren und eine Vorrichtung zur Rekonstruktion von 3D-Objekten aus Punktwolken.

### Hintergrund der Erfindung

Viele industrielle Anwendungsfälle beruhen darauf, reale Orte oder Gegenstände räumlich und farblich zu erfassen und in ein virtuelles, dreidimensionales Abbild zu verwandeln. Eine derartige virtuelle Kopie eines Ortes bzw. eines Gegenstandes, im Folgenden allgemein als Objekt bezeichnet, kann sodann mittels einer geeigneten Recheneinheit weiterführend analysiert, weiterbearbeitet oder einfach auch nur konserviert werden.

Im zweidimensionalen Bereich hat diese Art der virtuellen Abbildung in Form von digitalen Fotoapparaten bereits eine sehr große Verbreitung gefunden und ist technisch sowie von der Handhabung her mit wenigen Schwierigkeiten verbunden. Demgegenüber ist im dreidimensionalen, d.h. im räumlichen Bereich eine virtuelle Abbildung bislang noch der industriellen Anwendung vorbehalten und sowohl hardware- als auch softwareseitig mit größeren technischen Hürden verbunden.

Die digitalen 2D-Fotoapparate entsprechen in etwa den im dreidimensionalen Bereich bekannten 3D-Laserscannern.

Anders als bei einer digitalen 2D-Fotografie kann man jedoch erfasste Rohdaten eines 3D-Laserscanners nicht ohne Weiteres sinnvoll nutzen. Diese Rohdaten, im Folgenden auch als "Punktwolken" bezeichnet, bestehen im Wesentlichen aus datentechnisch enorm großen, unorganisierten Einzelpunkten. Jeder dieser Punkte beschreibt eine räumliche, dreidimensionale Position eines einzelnen Messstrahls und eventuell auch seine Oberflächenfarbe. Eine Visualisierung solcher Punktwolken ist oft nur durch eine starke Reduzierung der Punkteanzahl möglich. Will man bei einer Darstellung einer Punktwolke am Computer beispielsweise die Perspektive auf diese Punktwolke ändern, so ergibt sich eine animierte Bilderabfolge, die aufgrund der zu großen Datenmenge in der Regel jedoch nicht flüssig erscheint und somit ein dynamisches Arbeiten mit den erfassten Daten sehr erschwert.

Um einen derartigen Effekt zu vermeiden, werden Punktwolken vor einer animierten Darstellung in andere Formate konvertiert. Ein für die Darstellung an einer Recheneinheit, d.h. eines Computers schon seit langem bevorzugtes Format sind sogenannte Dreieckslisten. Dabei werden Oberflächen darzustellender Objekte mit einer Anzahl unterschiedlich großer und unterschiedlich positionierter Dreiecke abgebildet und jedes dieser Dreiecke wird mit einer Art Tapete, einer sogenannten "Textur" überzogen. Ist die Anzahl der Dreiecke ausreichend hoch und deren Größe ausreichend klein gewählt, so ist die entstehende Dreiecksstruktur in ihrer Gesamtheit nicht mehr zu erkennen, die Darstellung am Bildschirm jedoch erheblich schneller als bei allen anderen Formaten.

Derartige Dreieckslisten werden im Allgemeinen als "Mesh" bezeichnet. Eine Konvertierung einer Punktwolke in eine derartige Dreiecksliste wird als "Meshing" bezeichnet. Ein Meshing erfordert spezielle Werkzeuge, um eine erfolgreiche Konvertierung durchzuführen. Die derzeit am Markt verfügbaren Werkzeuge sind sehr komplex und erfordern in der Regel ein außergewöhnlich hohes Maß an Fachkenntnis, um bedient werden zu können.

Es existieren bereits zahlreiche sogenannte Meshing-Algorithmen, die als integrale Bestandteile von dreidimensionaler Software, beispielsweise 3D Studio Max, CAD-Programme, oder auch als separates Produkt erhältlich sind. Der Funktionsumfang umfasst dabei in der Regel eine Möglichkeit eines Importierens und Verarbeitens von Punktwolken sowie eine Verbindung der Punkte zu Polygonen. Ferner wird eine,Reduktion eines Detailgrads für eine schnellere Anzeige und eine Ausgabe des resultierenden Meshes in Standard-Dateiformaten oder eigenen Formaten bereitgestellt. Allerdings führen existierende Meshing-Lösungen nur in einem Bruchteil der Fälle zu einem brauchbaren Ergebnis. Da die Punkte in der Punktwolke in keiner Beziehung zueinander stehen und über die Topologie der Szenerie nichts bekannt ist, muss eine Meshing-Einheit selbst erkennen, welche Punkte verwendet werden sollen und welche nicht. Dabei reicht es allerdings bei weitem nicht aus, schlicht benachbarte Punkte zu verbinden. In der Praxis wird das Ergebnis eines Meshing-Prozesses nicht ohne Grund "Chaos-Mesh" genannt und muss umständlich manuell korrigiert werden, was als Retopologisierung bezeichnet wird.

Herkömmliche Meshing-Prozesse beruhen auf einer seriellen Abfolge von mehreren Einzelschritten. Einige dieser Schritte bringen zum Teil erhebliche Wartezeiten mit sich. Ein Benutzer wird gezwungen, einzelne Schritte anzustoßen und die darauf folgende Bearbeitungszeit abzuwarten, bevor ein darauffolgender, nächster Schritt angestoßen werden kann.

Solche Schritte sind Importieren einer oder mehrerer Punktwolken, verschiedene Meshing-Vorbereitungsschritte, das eigentliche Meshing, verschiedene Nachbearbeitungsschritte, und Exportieren des finalen Meshes.

Ebenso weit verbreitet ist die Herangehensweise, die gesamte Punktwolke in einem einzigen Meshing-Prozess in ein Dreiecksnetz zu verwandeln. Dies überfordert jedoch häufig die ohnehin schon hochkomplexen Meshing-Algorithmen und führt zu zahlreichen Fehlinterpretationen der Punktwolkendaten, gefolgt von arbeitsintensiven Nachbearbeitungsschritten.

Vor dem Hintergrund dieses Standes der Technik war es nunmehr eine Aufgabe der vorliegenden Erfindung, eine Möglichkeit vorzusehen, ein Ergebnis eines Meshing-Vorgangs schneller, effizienter und qualitativ hochwertiger bereitzustellen. Ferner soll das durch einen Meshing-Prozess erhaltene Ergebnis für eine Echtzeitenanwendung geeignet sein.

### Zusammenfassung der Erfindung

Die vorliegende Erfindung stellt ein computergestütztes Verfahren zum Erstellen eines digitalen, dreidimensionalen Abbildes eines realen Objekts mit den Merkmalen von Patentanspruch 1 bereit. Ferner wird eine entsprechende Vorrichtung mit den Merkmalen von Patentanspruch 13 bereitgestellt. Geeignete vorteilhafte Ausführungsformen sind den jeweiligen Unteransprüchen zu entnehmen.

Es wird ein computergestütztes Verfahren zum Erstellen eines digitalen, dreidimensionalen Abbildes eines realen Objekts vorgeschlagen, wobei das reale Objekt mittels eines Scanners, vorzugsweise eines Laserscanners gescannt wird und als dabei resultierende Scandaten eine Punktwolke bestehend aus einer Mehrzahl von Einzelpunkten erhalten und gespeichert wird, wobei jeder Einzelpunkt durch dreidimensionale Raumkoordinaten darstellbar ist. Die so erhaltene Punktwolke wird in eine Dreiecksliste zu einem Gesamt-Mesh konvertiert. Dabei wird das Konvertieren der Punktwolke in die Dreiecksliste in einem Prozessablaufplan modelliert und parametrisiert. Jeder Einzelschritt des Konvertierens wird in dem Prozessablaufplan durch einen individuell parametrisierbaren und ausführbaren Knoten und der Prozessablauf durch Verbindungen dieser Knoten untereinander dargestellt, so dass bei Ausführung der Knoten das Gesamt-Mesh erhalten wird.

In einer möglichen Ausführungsform des erfindungsgemäß vorgesehenen Verfahrens werden die Knoten verschiedenen Knotentypen zugeordnet und je nach Knotentyp besitzt ein jeweiliger Knoten mindestens einen entsprechenden Dateneingang und/oder mindestens einen entsprechenden Datenausgang. Der Prozessablauf wird sodann durch Verbindungen zwischen Datenausgängen und Dateneingängen visualisiert. Es ist auch möglich, dass ein Knoten je nach Knotentyp nur ein oder mehrere Dateneingänge oder ein oder mehrere Datenausgänge hat.

Es ist denkbar, dass jedem Knoten ein Ausführungsstatus und ein Aktualitätsgrad zugeordnet werden. Bei dem Ausführungsstatus kann es sich beispielsweise um Aussagen wie "untätig", "arbeitend", "fertig", "abbrechen", "abgebrochen" usw. handeln. Ein Aktualitätsgrad kann beispielsweise lauten "ungültig", "veraltet", "aktuell".

Je nach Ausführungsstatus und Aktualitätsgrad werden gemäß einer weiteren Ausführungsform des erfindungsgemäßen Verfahrens die Daten des entsprechenden Knotens in einem dreidimensionalen Visualisierungsbereich angezeigt.

Ferner ist es denkbar, dass einzelne Knoten bei Ausführung nur einen Teil der Punkte der Punktwolke selektieren und über ihren jeweiligen Datenausgang weitergeben, so dass die Punktwolke durch Ausführung einer Mehrzahl derartiger Knoten in mehrere kleine Teil-Punktwolken zerlegt wird.

Jede so entstehende Teil-Punktwolke wird dann gemäß einer weiteren Ausführungsform des erfindungsgemäßen Verfahrens in einem individuell parametrisierten Meshing-Knoten in ein Teil-Mesh umgewandelt. Die Datenausgänge aller dieser Meshing-Knoten, die jeweils eine Teil-Punktwolke in ein entsprechendes Teil-Mesh umwandeln, werden sodann in den Dateneingang eines Mesh-Ausgabeknotens zum Erstellen des Gesamt-Meshs zusammengefasst.

Dabei ist es möglich, dass vor Erstellen des Gesamt-Meshs die jeweiligen Teil-Meshs einzeln geprüft und bei Bedarf die entsprechenden Meshing-Knoten neu parametrisiert und erneut ausgeführt werden.

Generell können gegebenenfalls einzelne Knoten nach einer Ausführung bei Redarf erneut ausgeführt werden, um so das Gesamt-Meshing bereits sehr früh im Meshing-Prozess positiv zu beeinflussen.

Wie bereits voranstehend gesagt, kann jeder Knoten individuell parametrisiert werden, um eine genaue Funktionsweise des jeweiligen Knotens zu beeinflussen. Die Modellierung und Parametrisierung des Prozessablaufplans erfolgt in der Regel bevor oder während der tatsächlichen Durchführung des Prozessablaufs bzw. der Ausführung der jeweiligen Knoten. Jeder Knoten kann individuell ausgeführt werden. Benötigt ein Knoten zur Ausführung Daten eines gemäß Prozessablaufplan vorangegangenen Knotens und stellt dieser noch keine Daten bereit, weil er selbst noch nicht ausgeführt wurde, so wird dessen Ausführung durch den Prozessablauf dadurch automatisch angestoßen.

Wie bereits erwähnt, können Knoten auch nach einer Ausführung jederzeit erneut ausgeführt werden. Dies kann vor allem dann sinnvoll sein, wenn sich zwischenzeitlich Eingangsdaten geändert haben oder der Knoten selbst reparametrisiert wurde.

Es ist denkbar, dass ein final erhaltenes Gesamt-Mesh in einer Datenbank mit entsprechender Zuordnung zu einem Muster recherchier- und abrufbar gespeichert wird

Ferner wird von der Erfindung eine Vorrichtung zum Erstellen eines digitalen, dreidimensionalen Abbildes eines realen Objekts bereitgestellt. Die erfindungsgemäß vorgesehene Vorrichtung umfasst dabei einen Scanner, mit dessen Hilfe das reale Objekt gescannt werden kann, eine Aufnahme- und Speichereinheit zum Erzeugen und Speichern einer Punktwolke bestehend aus einer Mehrzahl von Einzelpunkten als dabei resultierende Scandaten, wobei jeder Einzelpunkt durch dreidimensionale Raumkoordinaten darstellbar ist, und eine Meshing-Einheit, in welcher die Punktfolge in eine Dreiecksliste zu einem Gesamt-Mesh zu konvertieren ist. Dabei ist in der Meshing-Einheit das Konvertieren der Punktwolke in die Dreiecksliste in einen Prozessablaufplan zu modellieren und zu parametrisieren. Es ist vorgesehen, dass in dem Prozessablaufplan jeder Einzelschritt des Konvertierens durch einen individuell parametrisierbaren und ausführbaren Knoten und der Prozessablauf durch Verbindung dieser Knoten untereinander darzustellen ist, so dass bei Ausführung der Knoten das Gesamt-Mesh erhalten wird.

Es ist denkbar, dass die Vorrichtung dazu konfiguriert ist, je nach Ausführungsstatus und Aktualisierungsgrad eines Knotens dessen Daten in einem dreidimensionalen Visualisierungsbereich anzuzeigen.

Ferner sind gemäß einer weiteren Ausführungsform der erfindungsgemäß vorgesehenen Vorrichtung für einzelne Knoten nach jeweiliger Ausführung jeweilige Zwischenergebnisse darstellbar und überprüfbar und die entsprechenden Knoten bei Bedarf einzeln reparametrisierbar und erneut ausführbar.

Ferner umfasst eine weitere Ausführungsform der erfindungsgemäß vorgesehenen Vorrichtung einen Zugriffspunkt zu einer Datenbank, in welcher final erhaltene Gesamt-Meshs mit entsprechender Zuordnung zu einem Muster recherchier- und abrufbar gespeichert sind.

Eine mögliche Ausführungsform der erfindungsgemäß vorgesehenen Vorrichtung umfasst die Datenbank als Teil der Vorrichtung selbst. Es ist jedoch auch denkbar, dass die Datenbank extern vorliegt und die Vorrichtung nur einen Zugang zu dieser Datenbank ermöglicht. Die Datenbank kann auch im Internet hinterlegt sein.

Das erfindungsgemäße Verfahren erlaubt völlig neue Arbeitsweisen bei Erstellung eines finalen Gesamt-Meshs.

Durch Knotentypen, die nur einen Teil einer importierten Punktwolke selektieren, und über ihren jeweiligen Datenausgang weitergehen, kann die Punktwolke, wie bereits angedeutet, in mehrere kleinere Teil-Punktwolken zerlegt werden. Jede Teil-Punktwolke kann dann mit einem individuell parametrisierten Meshing-Knoten in ein entsprechendes Teil-Mesh umgewandelt werden. Am Ende werden die Datenausgänge aller Meshing-Knoten wieder in einem Dateneingang eines Mesh-Exporter- bzw. Mesh-Ausgabeknotens zu einem Gesamt-Mesh zusammengefasst.

Diese Arbeitsweise bringt mehrere Vorteile mit sich. Während für eine Auswahl eines Teilbereichs der Punktwolke bereits ein zeitintensiver Meshing-Vorgang bzw. Meshing-Prozess angestoßen wird, kann der Prozessgraph bzw. der Prozessablaufplan für den nächsten Teilbereich der Punktwolke aufgebaut und parametrisiert werden. Der aktuell laufende Bearbeitungsfortschritt und die verbleibende Berechnungsdauer der zeitintensiven Prozesse lassen sich jederzeit an einem entsprechenden Knoten ablesen. Einige Meshing-Algorithmen bieten darüber hinaus die Möglichkeit, den Aufbau der Dreieckslisten in einem 3D-Visualisierungsbereich zu beobachten, während der Prozess läuft.

Eine bequeme Zerlegung eines langwierigen, großen Meshing-Prozesses in mehrere kleine Teilprozesse erlaubt einem Benutzer anhand von schnell verfügbaren Zwischenergebnissen, diese jeweils einzeln zu überprüfen, gegebenenfalls neu zu parametrisieren und dann gegebenenfalls ein erneutes Meshing anzustoßen. Dadurch kann das Meshing insgesamt schneller und qualitativ hochwertiger durchgeführt werden.

Häufig führen Fehlinterpretationen von Punktemustern während des Meshings auch weit von der fraglichen Stelle entfernt zu deutlichen Folgefehlern im finalen Gesamt-Mesh, da sich der mathematische Fehler sozusagen hochschaukelt. Durch eine Eingrenzung der Meshing-Schritte auf lokale Probleme können diese sich ausbreitenden Fehler weitestgehend vermieden werden.

Eine Zerlegung der Punktwolke in mehrere Teil-Punktwolken hat noch einen weiteren Vorteil, der sich vor allem beim Scannen von komplexen, heterogenen Umgebungen zeigt. Es ist denkbar, dass im Vorfeld einzelne Bereiche durch sogenannte Selektionsknoten isoliert werden. Eine derart isolierte Teil-Punktwolke kann dann von einem Meshing-Algorithmus erheblich besser in ein korrespondierendes Mesh umgewandelt werden. Zum einen kann eine Wahl des Meshing-Algorithmus bzw. seine Parametrisierung besser auf den isolierten Bereich, d.h. letztlich auf die isolierte Teil-Punktwolke abgestimmt werden, zum anderen muss der Algorithmus keine sogenannten Schmutzeffekte durch Einwirkung von Punkten benachbarter Bereiche berücksichtigen.

Durch die mögliche Überprüfung der Einzelschritte bzw. der Ausführung einzelner Knoten können die dadurch transparent veranschaulichten Zwischenergebnisse instantan bewertet und gegebenenfalls beeinflusst werden.

Sobald für ein bestimmtes geometrisches Muster, auch Pattern genannt, einmal ein optimales bzw. annähernd optimales Meshing gefunden wurde, wird dieses in Form einer Zuordnung in einer Datenbank gespeichert. In Zukunft können dann komplizierte Formen, die den Mesher bzw. die Meshing-Einheit vor ein Problem stellen, mit sämtlichen Mustern in der Datenbank abgeglichen und das zuvor gespeicherte optimale Meshing angewandt werden. Es ist auch möglich, eine Anbindung an eine Pattern-Datenbank im Internet bereitzustellen, wodurch der Mesher in der Lage ist, durch die Ergebnisse anderer Benutzer zu "lernen".

Die vorliegende Erfindung betrifft ferner ein Computerprogramm mit Programmcodemitteln, um ein erfindungsgemäßes Verfahren wie voranstehend beschrieben auszuführen, wenn das Computerprogramm auf einer Recheneinheit, die insbesondere Teil einer voranstehend beschriebenen erfindungsgemäßen Vorrichtung ist, ausgeführt wird.

Ferner betrifft die vorliegende Erfindung ein Computerprogramm, das auf einem computerlesbaren Datenträger gespeichert ist.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.

### Kurzbeschreibung der Zeichnung

Figur 1 zeigt in schematischer Darstellung ein Blockschaltbild einer Ausführungsform einer erfindungsgemäßen Vorrichtung.
Figur 2 zeigt eine Möglichkeit eines Prozessablaufplans, der gemäß einer Ausführungsform des erfindungsgemäßen Verfahrens modelliert ist und dann entsprechend parametriert werden kann.

### Detaillierte Beschreibung der Zeichnung

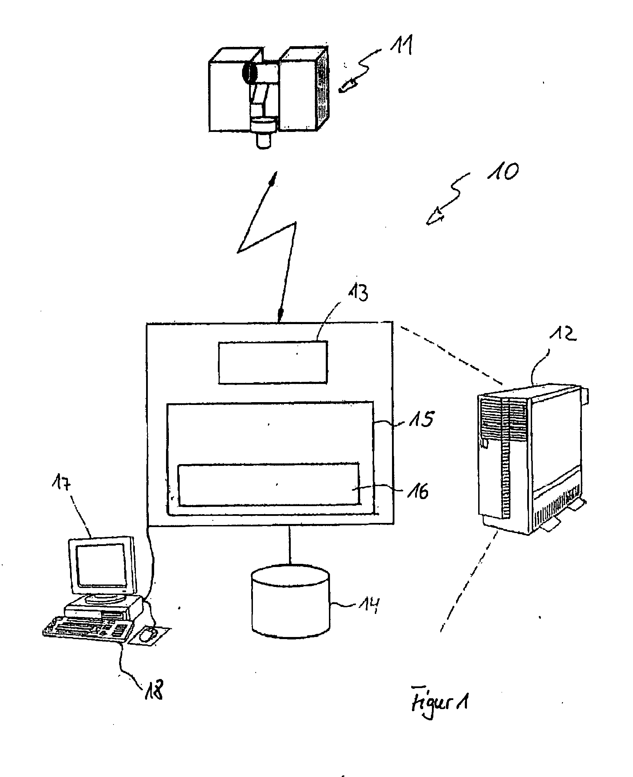

Figur 1 zeigt in schematischer Darstellung ein Blockschaltbild für eine mögliche Ausführungsform der erfindungsgemäßen Vorrichtung. Die hier dargestellte Ausführungsform 10 der erfindungsgemäßen Vorrichtung umfasst einen Scanner 11 und eine Recheneinheit 12. Der Scanner 11 ist dabei dazu konfiguriert, ein reales Objekt zu scannen und die dabei resultierenden Scandaten als Punktwolke an die Recheneinheit 12 weiterzuleiten. Die Recheneinheit 12 umfasst dabei eine Aufnahmeeinheit 13, mit welcher die erhaltenen Scandaten bzw. die Punktwolke importiert und in ein internes Punktwolkenformat überführt werden. Die Punktwolke besteht aus einer Mehrzahl von Einzelpunkten, wobei jeder Einzelpunkt durch dreidimensionale Raumkoordinaten darstellbar ist. Die so erhaltene Punktwolke wird in einer Speichereinheit 14 hinterlegt. Die Recheneinheit 12 umfasst ferner eine Meshing-Einheit 15, in welcher die Punktwolke in eine Dreiecksliste zu einem Gesamt-Mesh zu konvertieren ist. Dabei wird zunächst das Konvertieren der Punktwolke in die Dreiecksliste in einem Prozessablaufplan modelliert und parametrisiert, wozu eine weitere Modellier- und Parametriereinheit 16 vorgesehen ist. Dabei wird in dem Prozessablaufplan jeder Einzelschritt des Konvertierens durch einen individuell parametrisierbaren und ausführbaren Knoten und der Prozessablauf durch Verbindung dieser Knoten untereinander dargestellt, so dass letztlich bei Ausführung der Knoten das Gesamt-Mesh erhalten wird. Ferner ist eine Visualisierungseinheit 17 mit der Recheneinheit 12 und darüber mit der Meshing-Einheit 15 verbunden, so dass sowohl Ausführungsstatus und Aktualitätsgrad eines Knotens wie auch ein entsprechend modellierter Prozessablaufplan visualisiert und einem Anwender angezeigt werden können. Gegebenenfalls ist es ferner möglich, direkt an der Visualisierungseinheit 17 über Eingabemittel 18 eine Ausführung der Knoten anzustoßen, eine Wiederholung der Ausführung von spezifischen Knoten zu initiieren bzw. generell, falls erforderlich, Einfluss auf den Meshing-Prozess zu nehmen.

Die Speichereinheit 14 stellt ein zentrales Element der erfindungsgemäßen Vorrichtung dar. Die Speichereinheit 14 ist in ihrem Systemdesign auf das erfindungsgemäße Prinzip der Prozessmodellierung abgestimmt. In der Speichereinheit 14 werden Ergebnisse aller Vorgänge wie bspw. Importieren einer Punktwolke, Meshen einer Punktwolke oder eine spätere Umformung eines Teil-Meshes abgelegt. Ferner wird der Status des entsprechenden Knotens im Prozessablaufplan nach Durchführung des ihm zuzuordnenden Vorgangs auf "berechnet" gesetzt. Werden Parameter eines nachfolgenden Knotens geändert und muss dieser aufgrund dessen neu ausgeführt werden, so kann dieser nachfolgende Knoten auf das in der Speichereinheit 14 abgelegte Ergebnis seines Vorgängerknotens sehr schnell zugreifen. Die Speichereinheit 14 ist in der Regel hochgradig verfügbar und vollständig parallelisiert. Die Speichereinheit 14 kann ähnlich wie eine Datenbank von allen parallel laufenden Teilvorgängen quasi gleichzeitig und unabhängig voneinander befragt werden.

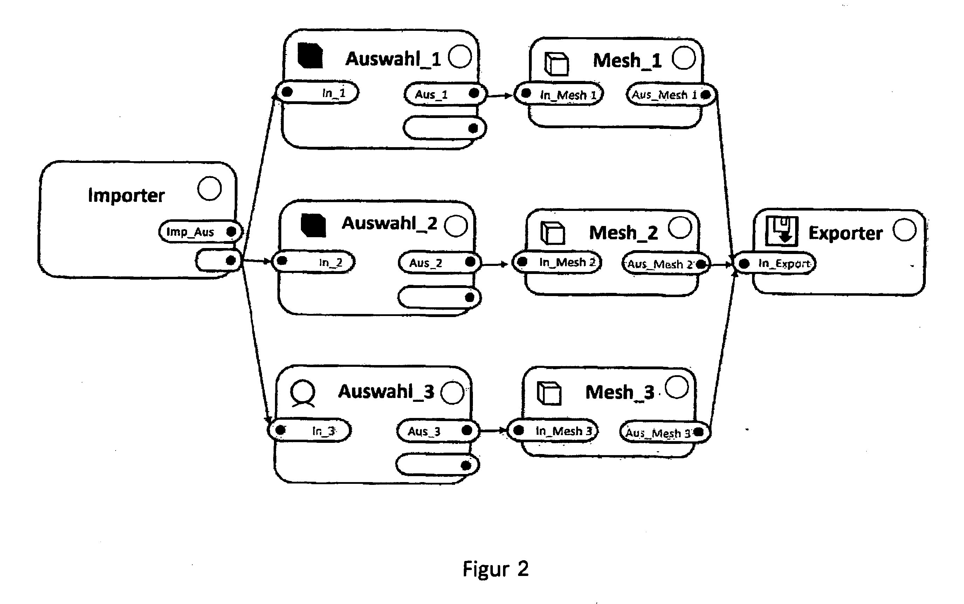

Figur 2 zeigt eine Modellierung eines Prozessablaufes zur Durchführung eines Meshing-Prozesses. Dabei wird jeder Schritt des Meshing-Prozesses durch einen Knoten dargestellt. Jeder Knoten gehört dabei einem bestimmten Knotentyp an. Je nach Knotentyp verfügt ein jeweiliger Knoten über Datenein- und/oder Datenausgänge. Die Knoten werden gemäß Prozessablaufplan ausgeführt und ein Gesamt-Mesh wird dadurch erhalten.

Hier dargestellt ist zunächst ein Knoten "Importer", welcher an seinem Datenausgang "Imp_Aus" eine Punktwolke wie sie als Resultat eines Scanvorgangs eines 3D-Objekts erhalten werden kann, ausgibt und an nachfolgende Knoten des modellierten Prozessplans weitergibt. Darauffolgende Knoten sind hier als "Auswahl" bezeichnet, wobei es sich hier im vorliegenden Fall um drei Knoten "Auswahl" handelt. Allen diesen drei Knoten "Auswahl_1", "Auswahl_2", "Auswahl_3" wird die Punktwolke an ihren jeweiligen Eingängen "In_1", "In_2", "In_3" zugeführt. Jeder der drei Auswahl-Knoten selektiert einen Teil der Punktwolke, so dass die Gesamt-Punktwolke sich aus den von den drei Knoten jeweils selektierten Teil-Punktwolken zusammensetzt. Die jeweiligen drei Knoten geben an ihren jeweiligen Ausgängen "Aus_1", "Aus_2", "Aus_3" die jeweilig selektierte Teil-Punktwolke an einen darauffolgenden Meshing-Knoten "Mesh_1", "Mesh_2" bzw. "Mesh_3" über einen jeweiligen entsprechenden Eingang "In_Mesh_1", "In_Mesh_2" bzw. "In_Mesh_3" weiter, d.h. jedem Auswahl-Knoten ist in der hier vorliegenden Darstellung ein Meshing-Knoten zugeordnet, welcher dem jeweiligen Auswahl-Knoten nachfolgt. Somit wird jede der drei Teil-Punktwolken durch einen Meshing-Knoten in eine Dreiecksliste konvertiert. Es ergeben sich somit drei Teil-Meshs entsprechend der drei durchgeführten Meshing-Prozesse auf den drei Teil-Punktwolken durch die drei angeordneten Meshing-Knoten "Mesh_1", "Mesh_2", "Mesh_3". Die jeweiligen Meshing-Knoten geben sodann ihre erstellten Teil-Meshes an ihren Ausgängen "Aus_Mesh_1", "Aus_Mesh_2", "Aus_Mesh_3" an einen Exporter-Knoten weiter, der die drei Meshes wiederum über seinen Eingang "In_Export" einliest. In dem Exporter-Knoten können die drei Teil-Meshes, die über seinen Eingang "In_Export" eingehen, konsolidiert und zu einem finalen Gesamt-Mesh zusammengeführt werden.

Es ist denkbar, dass jeder der hier dargestellten Knoten, der für einen Teilschritt des Gesamt-Meshing-Prozesses verantwortlich ist, bezüglich seiner jeweiligen Ausführung individuell geprüft und entsprechend auch neu parametrisiert werden kann. Das bedeutet, dass bei Ausführung der Knoten quasi zur Laufzeit in den Meshing-Vorgang eingegriffen werden kann, so dass nicht der gesamte Meshing-Vorgang nochmals durchlaufen werden muss, falls sich beim Gesamt-Mesh eine große Abweichung ergibt. Ein Eingriff ist bereits in einem frühen Stadium, d.h. an dem Knoten, an dem ein Fehler sich einzuschleichen droht, möglich. Jeder Knoten kann in einem Visualisierungsbereich bezüglich seiner Ausführung visualisiert dargestellt werden, so dass es einem Nutzer einfach erscheint, hier einen Abgleich mit dem realen Objekt durchzuführen.

Die Aufteilung einer Gesamt-Punktwolke in mehrere Teil-Punktwolken, wie hier beispielsweise in drei Teil-Punktwolken, hat den Vorteil, dass komplexere Geometrien in geeigneter Weise aufgeteilt werden können, so dass eine Annäherung an das reale Objekt in lokalen Bereichen wesentlich einfacher ist und somit bei Zusammenführung zu einem Gesamtbild das Objekt möglichst realitätsnah und effizient wiedergegeben werden kann.

## Patentansprüche

1. Computergestütztes Verfahren zum Erstellen eines digitalen, dreidimensionalen Abbildes eines realen Objekts, wobei das reale Objekt mittels eines Scanners gescannt, als dabei resultierende Scandaten eine Punktwolke bestehend aus einer Mehrzahl von Einzelpunkten erhalten und gespeichert wird, wobei jeder Einzelpunkt durch dreidimensionale Raumkoordinaten darstellbar ist, und die Punktwolke in eine Dreiecksliste zu einem Gesamt-Mesh konvertiert wird, wobei das Konvertieren der Punktwolke in die Dreiecksliste in einem Prozessablaufplan modelliert und parametrisiert wird, wobei in dem Prozessablaufplan jeder Einzelschritt des Konvertierens durch einen individuell parametrisierbaren und ausführbaren Knoten und der Prozessablauf durch Verbindungen dieser Knoten untereinander dargestellt wird, so dass bei Ausführung der Knoten das Gesamt-Mesh erhalten wird.

2. Verfahren nach Anspruch 1, wobei die Knoten verschiedenen Knotentypen zugeordnet werden und je nach Knotentyp ein jeweiliger Knoten mindestens einen entsprechenden Dateneingang und/oder mindestens einen entsprechenden Datenausgang besitzt und der Prozessablauf durch Verbindungen zwischen Datenausgängen und Dateneingängen visualisiert wird.

3. Verfahren nach Anspruch 1 oder 2, wobei jedem Knoten ein Ausführungsstatus und ein Aktualitätsgrad zugeordnet werden.

4. Verfahren nach Anspruch 3, wobei je nach Ausführungsstatus und Aktualitätsgrad eines Knotens dessen Daten in einem dreidimensionalen Visualisierungsbereich angezeigt werden.

5. Verfahren nach einem der voranstehenden Ansprüche, wobei einzelne Knoten bei Ausführung nur einen Teil der Punktwolke selektieren und über ihren jeweiligen Datenausgang weitergeben, so dass die Punktwolke dadurch in mehrere kleine Teil-Punktwolken zerlegt wird.

6. Verfahren nach Anspruch 5, wobei jede Teil-Punktwolke in einem individuell parametrisierten Meshing-Knoten in ein Teil-Mesh umgewandelt wird und die Datenausgänge aller Meshing-Knoten in dem Dateneingang eines Mesh-AusgabeKnotens zum Erstellen des Gesamt-Meshs zusammengefasst werden.

7. Verfahren nach Anspruch 6, bei dem die jeweiligen Teil-Meshs einzeln geprüft und bei Bedarf die entsprechenden Meshing-Knoten neu parametrisiert und ausgeführt werden.

8. Verfahren nach einem der voranstehenden Ansprüche, bei dem einzelne Knoten nach einer Ausführung bei Bedarf erneut ausgeführt werden.

9. Verfahren nach einem der voranstehenden Ansprüche, bei dem ein final erhaltenes Gesamt-Mesh in einer Datenbank mit entsprechender Zuordnung zu einem Muster recherchier- und abrufbar gespeichert wird.

10. Vorrichtung zum Erstellen eines digitalen, dreidimensionalen Abbildes eines realen Objekts, wobei die Vorrichtung umfasst: einen Scanner, mit dessen Hilfe das reale Objekt gescannt werden kann, eine Aufnahme- und Speichereinheit zum Erzeugen und Speichern einer Punktwolke bestehend aus einer Mehrzahl von Einzelpunkten als dabei resultierende Scandaten, wobei jeder Einzelpunkt durch dreidimensionale Raumkoordinaten darstellbar ist, und eine Meshing-Einheit, in welcher die Punktwolke in eine Dreiecksliste zu einem Gesamt-Mesh zu konvertieren ist, wobei das Konvertieren der Punktwolke in die Dreiecksliste in einem Prozessablaufplan zu modellieren und zu parametrisieren ist, wobei in dem Prozessablaufplan jeder Einzelschritt des Konvertierens durch einen individuell parametrisierbaren und ausführbaren Knoten und der Prozessablauf durch Verbindungen dieser Knoten untereinander darzustellen ist, so dass bei Ausführung der Knoten das Gesamt-Mesh erhalten wird.

11. Vorrichtung nach Anspruch 10, wobei je nach Ausführungsstatus und Aktualitätsgrad eines Knotens dessen Daten in einem dreidimensionalen Visualisierungsbereich angezeigt werden können.

12. Vorrichtung nach einem der Ansprüche 10 oder 11, wobei für einzelne Knoten nach jeweiliger Ausführung jeweilige Zwischenergebnisse darstellbar und überprüfbar sind und die entsprechenden Knoten bei Bedarf einzeln reparametrisierbar und erneut ausführbar sind.

13. Vorrichtung nach einem der Ansprüche 10, 11 oder 12, wobei einzelne Knoten nach einer Ausführung bei Bedarf erneut ausgeführt werden können.

14. Vorrichtung nach einem der Ansprüche 10 bis 13, die ferner einen Zugriffspunkt zu einer Datenbank umfasst, in welcher final erhaltene Gesamt-Meshs mit entsprechender Zuordnung zu einem Muster recherchier- und abrufbar gespeichert sind.

15. Vorrichtung nach Anspruch 14, bei der die Datenbank Teil der Vorrichtung ist.

16. Computerprogramm mit Programmcodemitteln, um ein Verfahren nach einem der Ansprüche 1 bis 9 auszuführen, wenn das Computerprogramm auf einer Recheneinheit, insbesondere als Teil einer Vorrichtung nach einem der Ansprüche 10 bis 15 ausgeführt wird.

17. Computerprogramm nach Anspruch 16, das auf einem computerlesbaren Datenträger gespeichert ist.
